# EUROPEAN PATENT SPECIFICATION

(11) **EP 0 864 630 B1**
(45) Date of publication and mention of the grant of the patent: **19.06.2002**
(21) Application number: 98301878.9
(22) Date of filing: 13.03.1998
(51) Int. Cl.: C09K 15/02, A23L 3/3436, B65D 81/26

(54) **Use of an oxygen absorbing composition, and a package for preserving an item**
Verwendung einer Sauerstofabsorbierenden Zusammensetzung und Verpackung zur Konservierung eines Gegenstands
Utilisation d'un absorbant d'oxygène et un emballage pour conserver un objet

(30) Priority: 13.03.1997 JP 5930297
(43) Date of publication of application: 16.09.1998
(73) Proprietor: MITSUBISHI GAS CHEMICAL COMPANY, INC., Tokyo 100-0005 (JP)
(72) Inventor: Eto, Haruaki, c/o Mitsubishi Gas Chem. Co., Inc., Katsushika-ku, Tokyo 125-0051 (JP); Nakata, Takashi, Mitsubishi Gas Chem. Co., Inc., Katsushika-ku, Tokyo 125-0051 (JP); Takahashi, Hideyuki Mitsubishi Gas Chem. Co., Inc., Katsushika-ku, Tokyo 125-0051 (JP)
(74) Representative: Slingsby, Philip Roy

(56) References cited:
- EP-A- 0 036 575
- EP-A- 0 329 897
- EP-A- 0 787 764
- US-A- 4 127 503
- US-A- 4 230 595

## Description

The present invention relates to the use of an oxygen absorbing composition for preserving an item under a low-humidity environment, and more particularly to the use of an oxygen absorbing composition including reduced metal and either a metallic iodide salt or a metallic bromide salt for preserving an item under a low-humidity environment where the water content is no more than 1%. Furthermore, the present invention relates to a package for preserving an item having an oxygen absorber packet for a low-humidity environment formed by having an oxygen absorbing composition wrapped in a gas-permeable wrapping material.

Conventionally, oxygen absorbers utilizing oxidizing reactions of reduced metals such as metallic iron etc. have been widely known. Such oxygen absorbers are placed in a sealed container together with items such as food etc. and are mainly used for preventing oxidized deterioration caused by oxygen and preserving the freshness and the quality of food etc. In an oxygen absorber using reduced metals, a metal halide is blended in addition to a reduced metal, which is a main agent, so as to function as an accelerator. Since oxygen absorbing reactions of reduced metals require existence of moisture, moisture is essential to oxygen absorption by oxygen absorbers of this type.

With a purpose of preserving the freshness of food etc., this type of oxygen absorber is put into a container or a wrapping bag together with an item to be preserved, or an item to be preserved is wrapped in a container or a bag containing such oxygen absorber.

The Japanese Patent Kokoku Publication No. SHO 56-33980 discloses an oxygen absorber wherein iron powder is covered with a metal halide. Since oxygen absorbing reactions of reduced metals require existence of moisture, this type of oxygen absorber is used for preserving food including large amount of water which enables utilization of water vaporized from the preserved item having high water content (in other words, having high water activity), and is thereby known as a moisture-dependent oxygen absorber.

On the other hand, the Japanese Patent Kokoku Publication No. SHO 57-31449 discloses an oxygen absorber for preserving dried food etc. having low water-content (in other words, having low water activity), wherein a water provider such as an inorganic filler etc. impregnated with water is included in the oxygen absorbing composition and moisture necessary for an oxygen absorbing reaction is supplied. Since this type of oxygen absorber holds moisture in itself, it is known as a self-reacting oxygen absorber capable of absorbing oxygen without depending on the moisture vaporized from items to be preserved.

However, problems with self-reacting oxygen absorbers holding water in themselves were that, when they were used for preserving items having low water content, the moisture of the oxygen absorber was inevitably transferred to the preserved item, and in some cases, deterioration of flavors by moisture (dampening) or change of quality etc. (powder formed into lumps) was caused. Moreover, there were problems that the moisture necessary for the oxygen absorbing reaction would be lost from the oxygen absorber and the oxygen absorbing function would be consequently reduced, and furthermore, the oxygen concentration inside the system would rise due to oxygen permeating from the outside of the container during the long preservation period and the deterioration of product quality etc. would be thereby caused.

On the other hand, although commercial moisture-dependent oxygen absorbers utilize chlorides such as sodium chloride or calcium chloride etc. as metal halides, the oxygen absorbing function is reduced under a low-humidity environment where relative humidity is no more than 70%, especially where it is no more than 60%.

In short, it was difficult to preserve items having low water activity such as dry food etc. in an oxygen-free state under an environment where relative humidity is no more than 70%.

The present invention is for solving problems of the oxygen absorbers of conventional technology.

The inventors carefully examined for a solution of the aforementioned problems and found that metallic iodide salt and metallic bromide salt, which had been thoroughly neglected theretofore as substances inferior to chlorides such as sodium chloride or calcium chloride, may function surprisingly as an accelerator of an oxygen absorbing reaction under a low-humidity environment where relative humidity is no more than 70% without the existence of any water provider, and thereby enable oxygen-free preservation of items such as dry food etc. having low water activity. The present invention was thus completed.

Although the above-mentioned Japanese Patent Kokoku Publication No. SHO 56-33980 refers to bromides and chlorides as options of oxygen absorbing reaction accelerators, this Kokoku Publidation does not disclose that oxygen absorbers which include oxygen absorbing reaction accelerators made of metallic bromides and metallic chlorides are effective for preserving low water-activity items such as dried food etc.

Furthermore, the Japanese Patent Kokoku Publication No. HEI 2-22701 discloses an oxygen absorber made of a basic halide and iron powder which does not require the use of any aqueous solution substance. However, this Kokoku Publication neither aims at providing halides capable of functioning as an oxygen absorber under a low-humidity environment nor suggests that oxygen absorbers including an oxygen absorbing reaction accelerator made of a metallic bromide salt and a metallic chloride salt is effective for preserving low water activity items such as dry food etc.

Namely, as means of solving the problems above, the present invention provides the use for preserving an item under an environment of no more than 70% relative humidity and in the absence of a water provider of an oxygen absorber packet comprising particles of an oxygen absorbing composition in a dry state and wrapped in a gas permeable wrapping material, the oxygen absorbing composition comprising a reduced metal and an accelerator, the accelerator comprising either a metallic iodide salt or a metallic bromide salt or a mixture thereof.

The reduced metal is preferably metal powder, and more preferably iron powder. Among metallic iodide salts and metallic bromide salts, alkaline metallic salts are preferable, and sodium salts and potassium salts are more preferable.

Having the aforementioned composition structure, the oxygen absorbing composition or the oxygen absorber packet shows a sufficient oxygen absorbing performance even when the relative humidity is 70% or less, especially when 60% or less.

The water content of the oxygen absorbing composition is preferably less than 1% by weight so that no moisture is transferred to dry items to which the oxygen absorber is applied. Therefore, according to the present invention, it is possible to have oxygen absorbed and eliminated in respect to dry items disfavoring moisture and thereby preserve such items under a low-humidity environment where relative humidity is 70% or less, especially 60% or less. Moreover, in respect to dry items having a water activity (aw) of 0.7 or less, especially 0.6 or less, while oxygen may not be absorbed by applying conventional moisture-dependent oxygen absorbers unless water is supplied, the present invention is capable of implementing oxygen absorption for an item having a water activity of 0.7 or less, especially 0.6 or less without any water being supplied.

The present invention also provides a package for preserving an item as defined in claim 6 of the attached set of claims.

The oxygen permeability of a gas-impermeable container is preferably 0.05-100cc/m², 24hr, atm (25°C, 50%RH).

The package of the present invention may be preferably used for an item having a water activity of 0.2-0.7, especially 0.2-0.6.

According to the present invention, absorption of oxygen may be implemented under a low-humidity environment where relative humidity (RH) is 20-70%, especially 20-60%, whereby items disfavoring absorption of moisture and requiring a low-humidity and dry environment for preservation, for example, powdered, granular, or tablet typed medical products, foods in a dry state such as health food, snacks, dried food, fried food or seasonings, and items to be preserved such as raw materials of food, chemical materials, and electrical components are preserved for a long period in an oxygen-free state with their qualities being favorably maintained.

Now, the present invention is described in further detail.

As a reduced metal to become the main agent of the oxygen absorbing composition, it is possible to use a particulate-type metal powder such as iron powder, copper powder, zinc powder etc. that are conventionally known as main agents of the publicly-known oxygen absorbers. In order to have the particulate-type metal powder favorably contact the oxygen, it is desirable that the particulate-type metal powder normally has a diameter of no more than 1700 µm (10 meshes), especially 10-300 µm (50 meshes). As a metal powder, it is desirable to use iron powder, and reduced iron powder, electrolyzed iron powder, atomized iron powder etc. are preferably used. Otherwise, milled or ground cast iron etc. can be used.

As a metallic iodide salt or a metallic bromide salt to be an oxygen absorbing reaction accelerator of the oxygen absorbing composition, preferably used are electrolytic salts of metals such as alkaline metals, alkaline earth metals, copper, zinc, aluminum, tin, iron, cobalt, nickel, etc., and a plurality of metallic salts can be combined. Sodium iodide and potassium iodide are the examples of the metallic iodide salts, and sodium bromide and potassium bromide are the examples of the metallic bromide salts. However, it is desirable that heavy metallic salts are avoided. Among the aforementioned metallic salts, sodium iodide and potassium iodide, sodium bromide and potassium bromide are desirable, and sodium iodide and potassium iodide are even more desirable.

The oxygen absorbing composition is effective when used under a condition with a relative humidity of 20-70%, especially 20-60%, notably 30-60%. If metallic bromide salt is used as an oxygen absorbing reaction accelerator, it is more effective within the afore-mentioned ranges but especially favorable within a range of 50-70%.

The amount of the metallic iodide salt or the metallic bromide salt to be blended in respect to the-reduced metal is: metallic iodide salt or metallic bromide salt 0.01-20 parts by weight, favorably 0.1-10 parts by weight, more favorably 0.5-6 parts by weight per reduced iron 100 parts by weight. If the amount of the metallic iodide salt or the metallic bromide salt blended is less than 0.01 parts by weight, the oxygen absorbing capability will decline. On the other hand, if the amount of the metallic iodide salt or the metallic bromide salt blended exceeds 20 parts by weight, the fluidity of the oxygen absorbing composition will be reduced, or the oxygen absorbing composition will absorb moisture and blots may be thereby caused. Therefore, neither case is desirable.

The method of blending a metal powder and a metallic iodide salt or a metallic bromide salt is not necessarily limited. For example, the metallic iodide salt or the metallic bromide salt can be made into an aqueous solution and be blended with the metal powder. It is especially preferable to use a method of blending an aqueous solution of a metallic iodide salt or a metallic bromide salt with iron powder because adhesion of the metal powder and the metallic iodide salt or the metallic bromide salt is thereby promoted. In such case, the blending amount of the metallic iodide salt or the metallic bromide salt can be reduced. Upon blending the metal powder with the metallic iodide salt or the metallic bromide salt, it is desirable that contact with air is kept at minimum.

In addition to the above-described metal powder, metallic iodide salt or metallic bromide salt, additive agents can be added to the oxygen absorbing composition if necessary. For example, siliceous powder, pearlite, diatomaceous earth, aluminum hydroxide, alumina, activated carbon, water-absorbing polymer, etc. can be suitably blended for preventing malodor, restraining dust, preventing blots of rust. It is preferable that the oxygen absorbing composition composed by adding the additive agent has a water content of no more than 1 % by weight, more preferably no more than 0.5% by weight.

The more the water content of the oxygen absorbing composition, the more will be the moisture transferred from the oxygen absorbing composition and the less will be the fluidity of the oxygen absorbing composition. Therefore, it is preferable that the water content of the oxygen absorbing composition is no more than 1% by weight. The ratio of the water content to the entire weight is to be no more than 1% by weight, and more preferably no more than 0.5% by weight. Although there is no limitation to the method of controlling the water content, it is preferable to add heat, reduce pressure, utilize drying agents or implement desiccation operation processing combining the foregoing.

As described above, the oxygen absorbing composition is composed of a reduced metal, which is to be the main agent, and a mixture including either a metallic iodide salt or a metallic bromide salt, which is to be the oxygen absorbing reaction accelerator, and thereby constitutes a powder and particulate-type oxygen absorbing composition which substantially includes no water, The oxygen absorbing composition is packed and wrapped in a small bag made of a gas-permeable wrapping material and used as an oxygen absorber packet. Porous or oxygen-permeating plastics, non-woven fabrics, paper, or, film, sheets or moldings composed of laminates of the foregoing may be used as gas-permeable wrapping materials. Examples of materials for plastics are polyester, polyamide, polycarbonate, polyolefine. On surfaces where the wrapping materials are adhered to each other, desirably placed are materials such as polyethylene or polypropylene etc. which can be heat sealed.

The oxygen absorbing composition package is effective when used under a condition with a relative humidity of 20-70%, especially 30-70%, notably 30-60%. If a metallic bromide salt is used as an oxygen absorbing reaction accelerator, the oxygen absorber packet is effective within the aforementioned ranges, but is especially effective within a range of 50-70%.

The oxygen absorbing composition package demonstrates effectiveness upon preservation of relatively dry items having a water activity of 0.2-0.7, especially 0.3-0.7. If a metallic bromide salt is used as an oxygen absorbing reaction accelerator, the oxygen absorber packet is effective within the aforementioned ranges, but is especially favorable for items having a water activity range of 0.5-0.7.

According to the present invention, oxygen absorption can be conducted under a relatively dry condition in respect to relatively dry items, without any moisture being supplied and without causing any transfer of moisture.

According to the present invention, items can be preserved in an oxygen-free state. In such cases, a gas-impermeable container (may be hereinafter simply referred to as a "container") is to be used, There is no limitation to the shape and the material of the container if such container can be sealed and comprises a gas-impermeable performance, which examples are: metal cans, glass jars, plastic containers, bags, etc. Furthermore, molded containers and bags composed of multilayer sheets or film having an oxygen permeability of 0.05-100cc/m², 24hr, atm (25°C, 50%RH) can be preferably used, which may be, for example, laminates of polyethylene terephthalete/ vapor-deposited aluminum/ polyethelene, laminates of oriented polypropylene/ polyvinylalcohol/polyethylene, laminates of polyvinylidene chloride coated (K coat) oriented nylon/ polyethylene etc., or nylon coextruded laminates.

Even when used under a low-humidity environment for the oxygen absorption of low-moisture content food, the oxygen absorber shows the following oxygen absorbing performance:

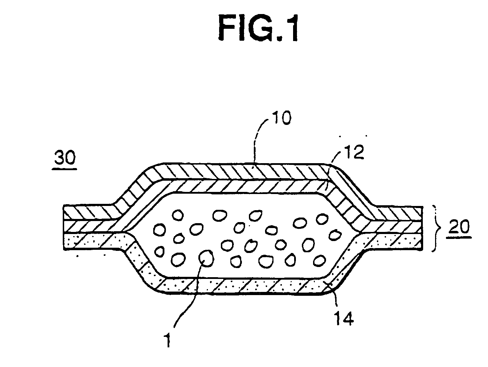

By using 2g of the oxygen absorber including at least either a metallic iodide salt or a metallic bromide salt, complete oxygen absorption is implemented in one day at a temperature of 25°C in respect to 500ml of relatively dry air having a relative humidity of 70-50%, the oxygen absorption of which had been difficult using oxygen absorbers comprising metallic chloride salts. By using 2g of the oxygen absorber including a metallic iodide salt, complete oxygen absorption is implemented in one day at a temperature of 25°C in respect to 500ml of dry air having a relative humidity of 30%. The oxygen absorber can be used for oxygen-free preservation of foods such as powder food. powder soup, cookies, etc. or relatively dry items. Figure 1 is a cross-sectional view showing an example of the oxygen absorber.

### (Example 1)

A potassium iodide solution (2g of potassium iodide) was added to 100g of iron powder (average particle diameter: 50 µm) by mixing the solution with the iron powder, and desiccation was implemented under a reduced pressure of 40mmHg at a temperature of 40°C, whereby produced was a particulate-type oxygen absorbing composition. 2g of the obtained oxygen composition was packed and wrapped in a small gas-permeable bag 20, the surface of which being made of polyester 10/ polyethylene 12 and the backside of which being made of a polyethylene non-woven fabric 14, and was thereby formed into an oxygen absorber packet 30. The water content of the oxygen absorbing composition was no more than 0.1% by weight when measured by Karl Fischer's Method. Subsequently, the oxygen absorber packet was put into gas-impermeable bags made of laminated film of K coat nylon/ polyethylene together with a piece of cotton, each impregnated with 10ml of 4 different types of glycerin solution shown below for adjusting humidity inside the bags to predetermined humidity. After filling 500ml of air, the bags were heat sealed. The bags holding the oxygen absorber packet and the cotton impregnated with glycerin solution were kept at 25°C, and the oxygen concentration inside the bag was measured each day by a zirconic oxygen analyzer (made by Toray Engineering Co., Ltd.) so that the deoxydation inside the bag may be followed. The results are shown in Chart 1. The relation between the concentration of glycerin solutions being used and the relative humidity (RH) inside of the bags were as follows:
(1) glycerin solution 34 parts by weight: RH 90%:
(2) glycerin solution 63 parts by weight: RH 70%;
(3) glycerin solution 79 parts by weight: RH 50%; and
(4) glycerin solution 92 parts by weight: RH. 30%.
(Bag (1) above is for comparative purposes only and is not in accordance with the present invention).

| [Chart 1] Oxygen concentration by volume in the bag | | | | | |
|---|---|---|---|---|---|
| | Metal Halide Type | After 1 Day; RH 90% | After 1 Day; RH 70% | After 2 Days; RH 50% | After 2 Days; RH 30% |
| Example 1 | potassium iodide | no more than 0.1% | no more than 0.1% | no more than 0.1% | no more than 0.1% |
| Example 2 | sodium iodide | no more than 0.1% | no more than 0.1% | no more than 0.1% | no more than 0.1% |
| Example 3 | potassium bromide | no more than 0.1% | no more than 0.1% | no more than 0.1% | 17.0% |
| Example 4 | sodium bromide | no more than 0.1% | no more than 0.1% | no more than 0.1% | 17.3% |
| Comparison 1 | potassium chloride | no more than 0.1% | 9.0% | 16.9% | 20.1% |
| Comparison 2 | sodium chloride | no more than 0.1% | 10.0% | 17.1% | 20.1% |
| Comparison 3 | calcium chloride | no more than 0.1% | 7.0% | 14.1% | 18.0% |

### (Examples 2-4)

The same procedures were performed as in example 1 except for using sodium iodide in example 2, potassium bromide in example 3 and sodium bromide in example 4 instead of potassium iodide in example 1. The water content of all oxygen absorbing compositions produced was no more than 0.1% by weight. The results are shown in Chart 1.

### (Comparisons 1-3)

The same procedures were performed as in example 1 except for using potassium chloride in comparison 1, sodium chloride in comparison 2 and calcium chloride in comparison 3 instead of potassium iodide in example 1. The water content of all oxygen absorbing compositions produced was no more than 0.1% by weight. The results are shown in Chart 1.

### (Example 5)

An oxygen absorber packet formed by having 0.5g of the oxygen absorbing composition produced in example 1 packed and wrapped in a small gas-permeable bag made of laminates of porous polyester/ porous polyethylene/oil-proof paper/ porous polyethylene was put into a gas-impermeable bag made of combined film (polyethylene terephtalete/ aluminum foil/ polyethylene) together with 50g of commercial granular-type soup stock (water activity: 0.35). The bag was further filled with 30ml of air and thereafter sealed. After preserving the sealed bag for 1 month at 25°C, the oxygen concentration inside the bag was measured as no more than 0.1%. The granular-type soup stock maintained a favorable flavor, and no solidification of the granules was observed.

### (Comparison 4)

The same procedure was performed as in example 5 except for using an oxygen absorber packet formed by having 0.5g of the oxygen absorbing composition produced in comparison 2 packed and wrapped in a gas-permeable bag and heat sealed. After preserving the sealed bag holding the oxygen absorber packet and granular-type soup stock for 1 month at 25°C, the oxygen concentration inside the bag was 19.7%. Although no solidification of the granular-type soup stock was acknowledged, its flavor had deteriorated.

### (Comparison 5)

The same procedure was performed as in example 5 except for using a commercial self-reacting oxygen absorber (product name: "Ageless Z-20PT"; manufactured by MITSUBISHI GAS CHEMICAL CO., INC.), which is an oxygen absorber packet formed by having an iron oxygen absorbing composition impregnated with water packed and wrapped in a gas-permeable bag. After preserving the sealed bag holding the oxygen absorber packet and granular-type soup stock for 1 month at 25°C, the oxygen concentration inside the bag was no more than 0.1%. Although the granular-type soup stock maintained a favorable flavor, aggregation and solidification of the granules were observed.

### (Example 6)

Sodium bromide solution (1g of sodium bromide) was added to 100g of iron powder (average particle diameter: 90 µm) by mixing the solution with the iron powder, and desiccation was implemented by hot air, whereby produced was a particulate-type oxygen absorbing composition. The water content of the oxygen absorbing composition was no more than 0.1 % by weight when measured by Karl Fischer's Method. Subsequently, an oxygen absorber packet formed by having 0.5g of the obtained oxygen composition packed and wrapped in a small gas-permeable bag, the surface of which being made of polyester/ polyethylene and the backside of which being made of a polyethylene non-woven fabric, was put into a gas-impermeable bag made of combined film (K coat nylon/ polyethelyne) together with 50g of cookies (water activity: 0.7). The bag was further filled with 30ml of air and thereafter sealed, After preserving the sealed bag for 1 month at 25°C the oxygen concentration inside the bag measured was no more than 0.1%. The cookies maintained a favorable flavor and color, and no dampness was noticed.

### (Comparison 6)

The same procedure was performed as in example 6 except for using sodium chloride instead of sodium bromide in example 6. After preserving the sealed bag enclosing the oxygen absorber packet and the cookies for 1 month at 25°C, the oxygen concentration inside the bag was 15.0%. The flavor and the color of the cookies inside deteriorated.

### (Comparison 7)

The same procedure was performed as in example 6 except for using a commercial self-reacting oxygen absorber (product name: "Ageless Z-20Pt"; manufactured by MITSUBISHI GAS CHEMICAL CO., INC.) which is an oxygen absorber having an iron oxygen absorbing composition impregnated with water packed and wrapped in a small gas-permeable bag. After preserving the sealed bag holding the oxygen absorber packet and the cookie for 1 month at 25°C the oxygen concentration inside the bag was measured as no more than 0.1%. Although the cookie inside maintained favorable flavor and color, dampness was noticed in the cookies.

According to the present invention, items having low water activity, especially medical products and food etc. in dry condition can be kept under an oxygen-free environment without causing any moisture absorption, and the items can be preserved for a long period without their quality being deteriorated or their nature being changed.

## Claims

1. The use for preserving an item having a water activity of 0.2 to 0.7 under an environment of no more than 70% relative humidity and in the absence of a water provider of an oxygen absorber packet comprising particles of an oxygen-absorbing composition in a dry state and wrapped in a gas-permeable wrapping material, the oxygen-absorbing composition comprising a reduced metal and an accelerator, the accelerator comprising either a metallic iodide salt or a metallic bromide salt, wherein the oxygen-absorbing composition has a water content of no more than 1% by weight.

2. The use according to claim 1 wherein the reduced metal is iron powder.

3. The use according to claim 1 or claim 2 wherein the metallic iodide salt or the metallic bromide salt is an alkali metallic iodide salt or bromide salt.

4. The use according to claim 3 wherein the alkali metallic iodide salt or bromide salt is a potassium salt or a sodium salt.

5. The use according to any preceding claim the item to be preserved is a medical product or food having a water activity of 0.2-0.6.

6. The use according to claim 1 wherein the oxygen-absorbing composition has a water content of no more than 0.5% by weight.

7. A package for preserving an item having a water activity of 0.2 to 0.7, comprising a gas-impermeable packaging container in which the item for preservation is held, and an oxygen absorber packet comprising particles of an oxygen-absorbing composition in a dry state and wrapped in a gas-permeable wrapping material, the oxygen-absorbing composition comprising a reduced metal and an accelerator, the accelerator comprising either a metallic iodide salt or a metallic bromide salt, **characterised in that** the gas-impermeable container does not contain a water provider and has a relative humidity of no more than 70% inside, and wherein the oxygen absorbing composition has a water content of no more than 1% by weight.

8. A package according to claim 7 wherein the reduced metal is iron powder.

9. A package according to claim 7 or claim 8 wherein the metallic iodide salt or the metallic bromide salt is an alkali metallic iodide salt or bromide salt.

10. A package according to claim 9 wherein the alkali metallic iodide salt or bromide salt is a potassium salt or a sodium salt.

11. A package according to any of claims 7 to 10 wherein the oxygen permeability of the gas-impermeable container is 0.05 to 100cc/m², 24h, atm (25°C, 50%RH).

12. A package according to any of claims 7 to 11 wherein the item to be preserved is a medical product or food having a water activity of 0.2-0.6.

13. A package according to any of claims 7 to 12 wherein the gas-impermeable container has a relative humidity of 20 to 70% inside.

14. A package according to claim 7 wherein the oxygen-absorbing composition has a water content of no more than 0.5% by weight.

## Patentansprüche

1. Verwendung eines Sauerstoffabsorberpakets, das Teilchen aus einer sauerstoffabsorbierenden Zusammensetzung in einem trockenen Zustand enthält und von einem gasdurchlässigen Umhüllungsmaterial umhüllt ist, zur Konservierung eines Gegenstands mit einer Wasseraktivität von 0,2 bis 0,7 in einer Umgebung mit höchstens 70% relativer Feuchte und in Abwesenheit einer wasserliefernden Substanz, wobei die sauerstoffabsorbierende Zusammensetzung ein reduziertes Metall und einen entweder ein Metalljodidsalz oder ein Metallbromidsalz enthaltenden Beschleuniger enthält, und einen Wassergehalt von höchstens 1 Gew.-% aufweist.

2. Verwendung nach Anspruch 1, bei der es sich bei dem reduzierten Metall um Eisenpulver handelt.

3. Verwendung nach Anspruch 1 oder 2, bei der es sich bei dem Metalljodid- oder Metallbromidsalz um ein Alkalimetalljodid- oder Alkalimetallbromidsalz handelt.

4. Verwendung nach Anspruch 3, bei der es sich bei dem Alkalimetalljodid- oder Alkalimetallbromidsalz um ein Kalium- oder Natriumsalz handelt.

5. Verwendung nach einem der vorhergehenden Ansprüche, bei dem es sich bei dem zu konservierenden Gegenstand um ein medizinisches Produkt oder ein Lebensmittel mit einer Wasseraktivität von 0,2-0,6 handelt.

6. Verwendung nach Anspruch 1, bei der die sauerstoffabsorbierende Zusammensetzung einen Wassergehalt von höchstens 0,5 Gew.-% aufweist.

7. Packung zur Konservierung eines Gegenstands mit einer Wasseraktivität von 0,2 bis 0,7, die einen gasundurchlässigen Verpackungsbehälter, der den zu konservierenden Gegenstand enthält, und ein Sauerstoffabsorberpaket, das Teilchen aus einer sauerstoffabsorbierenden Zusammensetzung in einem trockenen Zustand enthält und von einem gasdurchlässigen Umhüllungsmaterial umhüllt ist, wobei die sauerstoffabsorbierende Zusammensetzung ein reduziertes Metall und einen entweder ein Metalljodidsalz oder ein Metallbromidsalz enthaltenden Beschleuniger, enthält, **dadurch gekennzeichnet, dass** der gasundurchlässige Behälter keine wasserliefernde Substanz enthält und im Inneren eine relative Feuchte von höchstens 70% aufweist, und wobei die sauerstoffabsorbierende Zusammensetzung einen Wassergehalt von höchstens 1 Gew.-% aufweist.

8. Packung nach Anspruch 7, bei der es sich bei dem reduzierten Metall um Eisenpulver handelt.

9. Packung nach Anspruch 7 oder 8, bei der es sich bei dem Metalljodid- oder Metallbromidsalz um ein Alkalimetalljodid- oder Alkalimetallbromidsalz handelt.

10. Packung nach Anspruch 9, bei der es sich bei dem Alkalimetalljodid- oder Alkalimetallbromidsalz um ein Kaliumoder Natriumsalz handelt.

11. Packung nach einem der Ansprüche 7 bis 10, bei der die Sauerstoffdurchlässigkeit des gasundurchlässigen Behälters 0,05 bis 100 cm³/m², 24 h, atm (25°C, 50% RF) beträgt.

12. Packung nach einem der Ansprüche 7 bis 11, bei der es sich bei dem zu konservierenden Gegenstand um ein medizinisches Produkt oder ein Lebensmittel mit einer Wasseraktivität von 0,2-0,6 handelt.

13. Packung nach einem der Ansprüche 7 bis 11, bei der der gasundurchlässige Behälter im Inneren eine relative Feuchte von 20 bis 70% aufweist.

14. Packung nach Anspruch 7, bei der die sauerstoffabsorbierende Zusammensetzung einen Wassergehalt von höchstens 0,5 Gew.-% aufweist.

## Revendications

1. Utilisation, pour préserver un produit ayant une activité en eau de 0,2 à 0,7 dans un environnement de pas plus de 70% d'humidité relative et en l'absence d'un fournisseur d'eau, d'un paquet absorbeur d'oxygène comprenant des particules d'une composition absorbant l'oxygène dans un état sec et enveloppées dans un matériau d'enrobement perméable aux gaz, la composition absorbant l'oxygène comprenant un métal réduit et un accélérateur, l'accélérateur comprenant ou bien un sel d'iodure métallique ou bien un sel de bromure métallique, la composition absorbant l'oxygène ayant un contenu en eau de pas plus de 1% en poids.

2. Utilisation selon la revendication 1, dans laquelle le métal réduit est de la poudre de fer.

3. Utilisation selon la revendication 1 ou 2, dans laquelle le sel d'iodure métallique ou le sel de bromure métallique est un sel d'iodure ou de bromure métallique alcalin.

4. Utilisation selon la revendication 3, dans laquelle le sel d'iodure ou le sel de bromure métallique alcalin est un sel de potassium ou un sel de sodium.

5. Utilisation selon l'une quelconque des revendications précédentes, dans laquelle le produit à préserver est un produit médical ou de la nourriture ayant une activité en eau de 0,2 à 0,6.

6. Utilisation selon la revendication 1, dans laquelle la composition absorbant l'oxygène a un contenu en eau non supérieur à 0,5% en poids.

7. Paquet pour préserver un produit ayant une activité en eau de 0,2 à 0,7, comprenant un conteneur d'emballage imperméable aux gaz dans lequel le produit à préserver est maintenu, et un paquet absorbeur d'oxygène comprenant des particules d'une composition absorbant l'oxygène à l'état sec et enveloppées dans un matériau d'enrobement perméable aux gaz, la composition absorbant l'oxygène comprenant un métal réduit et un accélérateur, l'accélérateur comprenant un sel d'iodure métallique ou un sel de bromure métallique, **caractérisé en ce que** le conteneur imperméable au gaz ne contient pas de fournisseur d'eau et a une humidité relative interne non supérieure à 70%, et dans lequel la composition absorbant l'oxygène a un contenu en eau non supérieur à 1% en poids.

8. Paquet selon la revendication 7, dans lequel le métal réduit est de la poudre de fer.

9. Paquet selon la revendication 7 ou 8, dans lequel le sel d'iodure métallique ou le sel de bromure métallique est un sel d'iodure ou de bromure métallique alcalin.

10. Paquet selon la revendication 9, dans lequel le sel d'iodure ou le sel de bromure métallique alcalin est un sel de potassium ou un sel de sodium.

11. Paquet selon l'une quelconque des revendications 7 à 10, dans lequel la perméabilité à l'oxygène du conteneur imperméable aux gaz est de 0,05 à 100 cm³/m², 24 h, atm. (25°C, 50% HR).

12. Paquet selon l'une quelconque des revendications 7 à 11, dans lequel le produit à préserver est un produit médical ou de la nourriture ayant une activité en eau de 0,2 à 0,6.

13. Paquet selon l'une quelconque des revendications 7 à 12, dans lequel le conteneur imperméable aux gaz a une humidité relative interne de 20 à 70%.

14. Paquet selon la revendication 7, dans lequel la composition absorbant l'oxygène a un contenu en eau non supérieur à 0,5% en poids.
